# EUROPÄISCHE PATENTSCHRIFT

(11) **EP 0 451 358 B1**
(45) Veröffentlichungstag und Bekanntmachung des Hinweises auf die Patenterteilung: **12.01.1994**
(21) Anmeldenummer: 90124675.1
(22) Anmeldetag: 19.12.1990
(51) Int. Cl.: A01F 12/38, B07B 1/28

(54) **Hordenschüttler für selbstfahrende Mähdrescher**
Straw walker for combine harvester
Secoueur de paille pour moissonneuse-batteuse

(30) Priorität: 02.03.1990 DE 4006513
(43) Veröffentlichungstag der Anmeldung: 16.10.1991
(73) Patentinhaber: CLAAS OHG, D-33426 Harsewinkel (DE)
(72) Erfinder: Hegger, Josef, W-4834 Harsewinkel 1 (DE)

(56) Entgegenhaltungen:
- EP-A- 0 212 183
- DE-B- 1 148 099
- DE-C- 44 604
- DE-C- 52 300
- FR-A- 1 112 270
- FR-A- 1 577 191
- GB-A- 177 359
- GB-A- 1 602 099
- US-A- 3 627 277

## Beschreibung

Die Erfindung betrifft einen Hordenschüttler für selbstfahrende Mähdrescher, deren einzelne Schüttlerhorden sowohl im Bereich des Guteintritts wie auch im Bereich des Gutabwurfs an je einer Stütze beweglich gelagert sind, welche über Schwinghebel und Koppelstangen mit einem etwa mittig unter einer Schüttlerhorde angeordnetem Exzentertrieb in Verbindung stehen, dergestalt, daß jede der beiden Koppelstangen einendig mit dem Exzentertrieb und anderenends mit je einem Schwinghebel verbunden sind.
Es sind Schüttler bei Mähdreschern bekannt, die durch zwei Kurbelwellen bewegt werden. Diese Schüttlerantriebe haben den Nachteil, daß der Schüttler nur eine kreisförmige Parallelbewegung ausführt. Die Kreisbewegung gibt nur eine relativ schwache Aufschüttlung, so daß Körnerverluste noch relativ groß sind.
Bei einem anderen bekannten Schüttlerantrieb, dessen von einer Kurbelwelle angetriebener Schüttler mit der Kurbelwellenkröpfung durch eine am vorderen Teil des Schüttlers drehbar gelagerte Kurbelstange verbunden ist, vollführt das beginnseitige Ende des Schüttlers eine elliptische Bewegung. Das wird dadurch erreicht, daß die Kurbelstange mit einem an der Seite des Anschlußes an den Schüttler befindlichen Schwingungslager versehen ist, welches das Traglager für den beginnseitigen Teil des Schüttlers bildet. Dadurch beschreibt dieser Teil des Schüttlers während seiner durch den Kurbelmechanismus erzeugten Hin- und Herbewegung eine elliptische Bewegung, derart, daß sich die große Achse der Ellipse im wesentlichen in Längsrichtung des Schüttlers erstreckt. Das abgabeseitige Ende des Schüttlers wird von einem Schwingarm getragen. Nachteilig bei dieser Ausführung ist, daß nur das eine Schüttlerende elliptisch bewegt wird, während das andere Ende nur eine hin- und herschwingende Bewegung ausführt. Somit tritt nur an der Ellipse eine Schüttelwirkung auf, während anderenends nur eine Förderwirkung auftritt. Ein weiterer Nachteil besteht darin, daß die große Achse der Ellipse annähernd waagerecht liegt. Dadurch wird das Stroh relativ schnell über den Schüttler geführt, d. h., die Zeit, in der das Stroh auf dem Schüttler verbleibt, ist sehr kurz und damit die Ausschüttelung gering.

Zur Vermeidung dieses Nachteils ist es allerdings auch schon aus der DE-B-1148099 bekannt, daß die Antriebskurbelwelle zwei versetzt zueinander angeordnete Antriebskurbeln aufweist, von denen eine über eine Koppelstange mit dem Schüttler, die andere über mindestens eine Koppelstange und eine Schwinge mit einer am Schüttler gelenkig angreifenden Pendelstütze in Antriebsverbindung steht. Eine solche Anordnung ermöglicht eine elliptische Bewegung des Schüttlers, und zwar parallel über seine ganze Länge. Die Hauptachse der Ellipse steht dabei vertikal oder annähernd vertikal, so daß die Hubbewegung des Schüttlers sehr groß ist und das auf ihr transportierte Langstroh stark durchschüttelt.
Die Praxis hat nun gezeigt, daß keine der zuletzt genannten Anordnungen den Anforderungen gewachsen ist, die an moderne Mähdrescher gestellt werden. Diese Anforderungen bestehen darin, Mähdrescher bei unterschiedlichsten Witterungsbedingungen zum Ernten unterschiedlichster Fruchtarten einsetzen zu können, wobei hinsichtlich der Restkornausscheidung in allen Fällen ein möglichst gutes Ergebnis erzielt wird.

Die Lösung dieser Aufgabe wird bei einem Mähdrescher der eingangs näher bezeichneten Art dadurch erreicht, daß jeweils eine Stütze mit je einer Koppelstange und zumindest eine der beiden Stützen sowohl mit der Schüttlerhorde als auch mit der ihr zugeordneten Koppelstange Verschiebbar verbunden ist. Durch eine solche Ausbildung ist es möglich, eine Schüttlerhorde auf einer elliptischen Bewegungsbahn zu fahren, wobei je nach Lage der Stütze die Hauptachse der Ellipse verändert werden kann. Zweckmäßigerweise wird diese Lage auf 45° eingestellt.

Obwohl die Industrie schon seit längerem Mähdrescher produziert, deren Hordenschüttler auf elliptischen Bahnen bewegt werden, ist es ihr bisher nicht gelungen, die Lagerung so auszugestalten, daß die Lage der Hauptachse der Ellipse veränderbar ist. Das wird erst durch die vorstehende Erfindung ermöglicht.

Weitere vorteilhafte Ausführungsformen der Erfindung sind in den Unteransprüchen näher definiert.

Im folgenden soll die Erfindung anhand eines Ausführungsbeispieles und einer einzigen dieses schematisch darstellenden Figur näher erläutert werden. Dabei ist mit 1 eine Antriebswelle bezeichnet, auf die eine Exzenterscheibe 2 fest aufgesetzt ist. Die Exzenterscheibe 2 ist von einem Gehäuse 3 umgeben, welches die Exzenterscheibe 2 frei drehbar umfaßt. Mit der linken Seite des Gehäuses 3 ist eine Koppelstange 4 festverbunden, die mit ihrem dem Gehäuse 3 abgewandten Ende an dem oberen Ende einer Schwinge 5 angelenkt ist. Das untere Ende der Schwinge 5 ist schwenkbar in einer maschinenfesten Lagersohle 6 gelagert. Auf der Koppelstange 4 ist ein in beliebigen Stellungen mit der Koppelstange 4 arretierbarer Schlitten 7 aufgesetzt, an dem eine Stütze 8 befestigt ist. Das obere Ende der Stütze 8 weist einen Befestigungskopf 9 auf, der mit einer Schiene 10 verbunden ist. Diese Schiene 10 weist eine Vielzahl von Arretierungsbohrungen auf, so daß der Kopf 9 in jeder Stellung des Schlittens 7 auf der Koppelstange 4 in einer der Bohrungen 11 verriegelt werden kann. Die Schiene selbst ist mit dem guteinlaufseitigem Ende einer Schüttlerhorde 12 festverbunden. Im abwurfseitigem Bereich dieser Schüttlerhorde 12 ist mit ihr eine Konsole 13 festverschweißt, mit der eine Stütze 14 gelenkig verbunden ist. Das der Konsole 13 abgewandte Ende der Stütze 14 sitzt fest auf einer Koppelstange 15, die mit ihrem einen Ende gelenkig mit dem Gehäuse 3 und mit ihrem anderen Ende gelenkig mit dem oberen Ende einer Schwinge 16 verbunden ist. Das der Koppelstange 15 abgewandte Ende der Schwinge ist ebenso wie die Schwinge 5 verschwenkbar an einer maschinenfesten Lagerkonsole 17 gelagert.

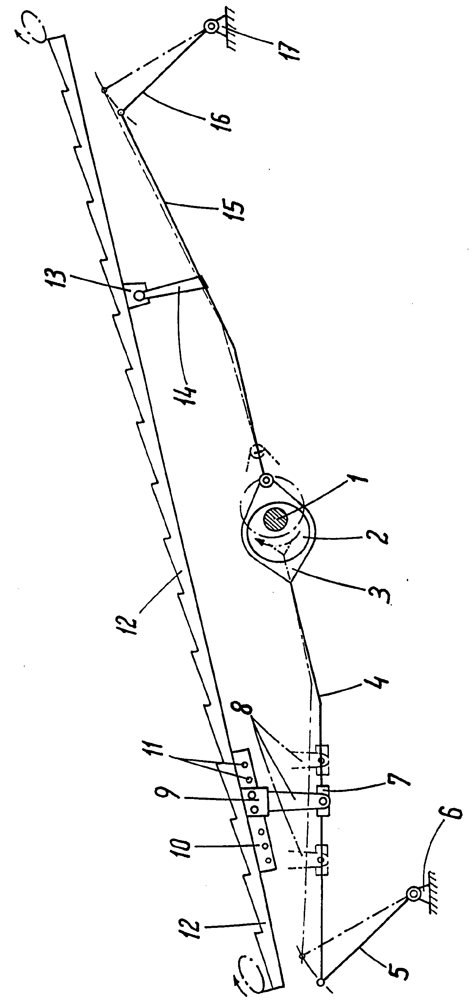

## Patentansprüche

1. Hordenschüttler für selbstfahrende Mähdrescher, mit einzelnen Schüttlerhorden die sowohl im Bereich des Guteintritts wie auch im Bereich des Gutabwurfs an je einer Stütze beweglich gelagert sind, welche über Schwenkhebel und Koppelstangen mit einem etwa mittig unter einer Schüttlerhorde angeordneten Exzentertrieb in Verbindung steht, dergestalt, daß jede der beiden Koppelstangen einendig mit dem Exzentertrieb und anderenends mit je einem Schwinghebel verbunden sind,
**dadurch gekennzeichnet,** daß jeweils eine Stütze (8,14) mit je einer Koppelstange (4,15) und zumindest eine der beiden Stützen (8 14) sowohl mit der Schüttlerhorde (12) als auch mit der ihr zugeordneten Koppelstange (4) verschiebbar verbunden ist.

2. Hordenschüttler nach Anspruch 1,
**dadurch gekennzeichnet,** daß die Schwinghebel (5,16) mit ihren den Koppelstangen (4,15) abgewandten Enden in mähdrescherrahmenfesten Konsolen (7) gelagert sind.

3. Hordenschüttler nach den Ansprüchen 1 und 2, **dadurch gekennzeichnet,** daß die Stütze (8) mittels eines in unterschiedlichen Stellungen der Koppelstange (4) verriegelbaren Schlittens (7) auf der Koppelstange (4) gelagert ist.

4. Hordenschüttler nach den Ansprüchen 1 bis 3, **dadurch gekennzeichnet,** daß die Stütze (8) in unterschiedlichen Stellungen mit einer an der Schüttlerhorde (12) angebrachten Schiene (10) verriegelbar ist.

5. Hordenschüttler nach den Ansprüchen 1 bis 4, **dadurch gekennzeichnet,** daß die Koppelstangen (4,15) mit dem Gehäuse (3) verbunden sind, wobei letztere die Exzenterscheibe (2) freidrehbar umfaßt und die Exzenterscheibe (2) fest auf einer Antriebswelle (1) sitzt.

6. Hordenschüttler nach den Ansprüchen 1 bis 5, **dadurch gekennzeichnet,** daß eine Koppelstange (4) fest mit dem die Exzenterscheibe (2) umfassenden Gehäuse verbunden ist.

7. Hordenschüttler nach den Ansprüchen 1 bis 6, **dadurch gekennzeichnet,** daß eine Koppelstange (15) gelenkig mit dem die Exzenterscheibe (2) umfassenden Gehäuse (3) verbunden ist.

8. Hordenschüttler nach den Ansprüchen 1 bis 7, **dadurch gekennzeichnet,** daß die Stütze (14) einendig gelenkig und anderenends starr mit der ihr zugeordneten Schüttlerhorde bzw. Koppelstange (15) verbunden ist.

## Claims

1. A straw walker assembly for self-propelled combine harvesters, having individual straw walker members which are movably mounted on respective supports both in the region of the intake of material and also in the region of the discharge of material, which supports are connected by way of pivotal levers and coupling rods to an eccentric drive disposed substantially centrally below a straw walker member, in such a way that each of the two coupling rods is connected at one end to the eccentric drive and at the other end to a respective rocking lever, characterised in that each support (8, 14) is connected to a respective coupling rod (4, 15) and at least one of the two supports (8, 14) is displaceably connected both to the straw walker member (12) and also to the coupling rod (4) associated with same.

2. A straw walker assembly according to claim 1 characterised in that the rocking levers (5, 16) are mounted by their ends remote from the coupling rods (4, 15) in brackets which are fixed with respect to the frame of the combine harvester.

3. A straw walker assembly according to claims 1 and 2 characterised in that the support (8) is mounted on the coupling rod (4) by means of a slider (7) which can be locked in different positions on the coupling rod (4).

4. A straw walker assembly according to claims 1 to 3 characterised in that the support (8) can be locked in different positions to a rail (10) mounted on the straw walker member (12).

5. A straw walker assembly according to claims 1 to 4 characterised in that the coupling rods (4, 15) are connected to the housing (3), the housing freely rotatably embracing the eccentric disc (2) and the eccentric disc (2) being fixedly carried on a drive shaft (1).

6. A straw walker assembly according to claims 1 to 5 characterised in that a coupling rod (4) is fixedly connected to the housing which embraces the eccentric disc (2).

7. A straw walker assembly according to claims 1 to 6 characterised in that a coupling rod (15) is pivotably connected to the housing (3) which embraces the eccentric disc (2).

8. A straw walker assembly according to claims 1 to 7 characterised in that the support (14) is connected at one end pivotably and at the other end rigidly to the associated straw walker member and coupling rod (15) respectively.

## Revendications

1. Secoueur à claies pour moissonneuse-batteuse automotrice, dont les claies de secouage individuelles sont montées de façon mobile sur des appuis respectifs dans la région d'entrée des produits ainsi que dans la région de sortie des produits, appuis qui sont en liaison par l'intermédiaire de leviers oscillants et de tiges d'accouplement avec un dispositif d'entraînement excentrique disposé sensiblement centralement au-dessous d'une claie de secouage, les deux tiges d'accouplement étant reliées à une extrémité avec le dispositif d'entraînement excentrique et à l'autre extrémité avec un levier oscillant, caractérisé en ce que chaque appui (8, 14) est relié à une tige d'accouplement (4, 15) et en ce qu'au moins l'un des deux appuis (8, 14) est relié de façon déplaçable aussi bien avec la claie de secouage (12) qu'avec la tige d'actionnement (4) qui lui sont associées.

2. Secoueur à claies selon la revendication 1, caractérisé en ce que les leviers oscillants (5, 16) sont montés par leurs extrémités qui sont à l'opposé des tiges d'accouplement (4, 15) sur des consoles (7) solidaires du châssis de la moissonneuse-batteuse.

3. Secoueur à claies selon les revendications 1 et 2, caractérisé en ce que l'appui (8) est monté sur la tige d'accouplement (4) au moyen d'un coulisseau (7) qui peut être verrouillé dans des positions diverses sur la tige d'accouplement (4).

4. Secoueur à claies selon les revendications 1 à 3, caractérisé en ce que l'appui (8) peut être verrouillé dans des positions diverses au moyen d'un rail (10) monté sur la claie de secouage (12).

5. Secoueur à claies selon les revendications 1 à 4, caractérisé en ce que les tiges d'accouplement (4, 15) sont reliées au logement (3), ce dernier entourant le disque excentrique (12) de manière que ce dernier puisse tourner librement, le disque excentrique (2) étant solidaire d'un arbre d'entraînement (1).

6. Secoueur à claies selon les revendications 1 à 5, caractérisé en ce qu'une tige d'accouplement (4) est reliée fermement au logement qui entoure le disque excentrique (2).

7. Secoueur à claies selon les revendications 1 à 6, caractérisé en ce qu'une tige d'accouplement (15) est reliée de façon articulée avec le logement (3) qui entoure le disque excentrique (2).

8. Secoueur à claies selon les revendications 1 à 7, caractérisé en ce que l'appui (14) est relié de façon articulée par une extrémité à la claie de secouage et de façon rigide par son autre extrémité à la tige d'accouplement (15) qui lui sont associées.
